# EUROPEAN PATENT SPECIFICATION

(11) **EP 1 073 915 B1**
(45) Date of publication and mention of the grant of the patent: **24.01.2007**
(21) Application number: 99923462.8
(22) Date of filing: 24.04.1999
(51) Int. Cl.: G01S 5/30, G01S 5/18

(54) **METHOD AND APPARATUS FOR THE DETECTION, BY MEANS OF ULTRASONIC PULSES, OF THE COORDINATES OF POINTS OF OBJECTS WITH RESPECT TO A REFERENCE SYSTEM**
VERFAHREN UND VORRICHTUNG ZUR BESTIMMUNG DER KOORDINATEN DER PUNKTE EINES OBJEKTES BEZÜGLICH EINES REFERENZSYSTEMS MITTELS ULTRASCHALLIMPULSEN
PROCEDE ET APPAREIL DE DETECTION ULTRASONORE DES COORDONNEES DE POINTS D'OBJETS PAR RAPPORT A UN SYSTEME DE REFERENCE

(30) Priority: 24.04.1998 IT PI980032
(43) Date of publication of application: 07.02.2001
(73) Proprietor: I.S.E. Ingegneria dei Sistemi Elettronici S.r.l., 56010 Migliarino Pisano (IT); B.B.M. S.r.l., I-54100 Massa (IT)
(72) Inventor: BIANCHI, Daniele, I-55100 Lucca (IT); CREMONCINI, Andrea, I-19034 Ortonovo (IT); DI BENE, Giulio, I-56021 Cascina (IT); LAZZAROTTI, Marco, I-56121 Pisa (IT); SANI, Antonio, I-55048 Torre del Lago Puccini (IT)
(74) Representative: Celestino, Marco
(86) International application number: PCT/EP1999/002789
(87) International publication number: WO 1999/056146

(56) References cited:
- EP-A- 0 244 513
- GB-A- 2 259 364
- US-A- 4 991 148
- US-A- 5 557 268

## Description

### Field of the invention

The present invention generally relates to a method for the detection of the coordinates of objects with respect to a reference system.

Moreover, it relates to an apparatus that carries out such a method. Precisely, the invention regards an apparatus for the detection of the position of points of objects, even complex, for making from a remote position an electronic mapping thereof or checking the correct location of some relevant points.

In particular, but not exclusively, the invention relates to an apparatus for the detection of the position of points of cars, their comparison with the theoretical positions, as well as the verification of diagonals lengths and of the symmetries of points for checking the integrity of cars or the amount of the deformation resulting from crashes.

### Description of the prior art

The problem is felt in measuring the coordinates of points of objects, even complex, with respect to a fixed reference system in order to carry out an electronic mapping thereof and, then, for calculating, measuring and editing purposes.

Exemplifying objects are models of buildings, prototypes of machines, positive or negative of moulds, etc.

Presently, no known manual tools can be used for determining directly the coordinates of points of objects.

A particular case is that of crashed cars, which are deformed in a three-dimensional way w.r.t. the designed shapes. The measure of the deformations is always difficult to carry out.

Presently, crashed cars are repaired at body shops, by means of equipment consisting in diagnostic benches, or "templates", which do not allow a three dimensional control of the correct location of chosen key points of the body. The key points are normally located at the car under-body, where the main mechanical parts are connected to the frame. Other key points are the connections to the body of the front and rear bumpers and of the shock absorbers.

Diagnostic benches have been improved with respect to the existing fixed structures, one for each type of car, as adjustable structures, so called universal, which provide a position and/or force measuring terminal at each key point.

Universal benches are of at least two categories: a first type allows operations of "stretching" or repairing the car separately from the measuring step, whereas a second type allows at the same time the measuring and the repairing steps.

Presently, different methods are known, for arranging the cars to check with the benches, of which some are the following:
- benches are equipped with measuring rulers on three orthogonal axis;
- laser emitting means produce orthogonal light beams that are directed onto suitable targets located at the theoretical points of the vehicle;
- mobile portions are provided with arms equipped with many spatial degrees of freedom, having probes located at the points to measure;
- a parallelepiped bar or beam, disclosed in GB2259364A, is used equipped with a plurality of sensors of ultrasonic pulses and a plurality of probes is located at the points to measure, whose position is measured by triangulation on the basis of the bar geometry and of the sensors position.

Each of these methods has advantages and drawbacks with respect to one another and in any case their efficiency and their use on the global market are such that enough space is left to more sophisticated systems easier to use and having wider measuring ranges.

In particular, these systems usually do not allow a control of the upper-body (bonnet, roof, doors etc.) since they are designed for repairing the car under-body as well as the structures that support the motor and the shock absorbers.

Furthermore, all these systems provide that the car in the diagnostic step is arranged on an equipment (bench), and this requires a long time. This is not a problem when the car has to be repaired, because the repair requires in any case the use of the bench, but is too expensive when a non complex diagnosis has to be made such as a preliminary check or a final check of the repairs.

### Summary of the invention

It is one of the objects of the present invention to provide a method for the detection of the coordinates of points of objects with respect to a reference system and for making an electronic mapping thereof, which is not complex and provides a satisfactory precision.

In particular, the present invention has as its main object to improve methods presently existing for measuring the points of cars, allowing a measure and control of coordinates, distances, diagonals and symmetries in an accurate way and in a short time, both of the car upper-body and under-body, as well as of all other parts of the body, for checking the integrity or the amount of the deformation further to crash.

Furthermore, the invention relates to an apparatus that carries out a method for the detection of the coordinates of objects with respect to a reference system.

The method, for the detection of the spatial positions of a probe of a testing device that touches said object, comprises the steps as set out in claim 10.

Preferably, according to the method, the receivers are kept integral to a reference object and said testing device measures the coordinates with respect to a reference system correlated to said reference object.

Another aspect of the present invention relates to an apparatus for the detection, by means of ultrasonic pulses, of the coordinates of objects with respect to a reference system, comprising the features as set out in claim 1.

Said correlating means advantageously comprises:
- an electronic control unit having means for driving said senders, means for analysing the signals obtained from said receivers, and means for measuring the delays at said receivers of the pulses coming from said senders;
- a computing unit connected with said electronic control unit and comprising display means, such as a monitor;
- a software residing in said computing unit which, starting from said pulses and said delays, calculates the position of said probe of the testing device and communicates them to the display means.

Preferably, said software comprises:
- an algorithmic part which, by means of geometrical formulas in three-dimensional space, derives coordinates from the pulses and their delays;
- a database that contains the dimensional data of the objects to measure, such as for example cars present on the market, said data being compared with said measured coordinates.

Advantageously, said software comprises also a display control that allows the derivation from the database of the specific car model to check, allows the measure and provides the results, administers a database of the body shop clients (or of the factory that carries out the measuring), on demand carries out the printouts with the results of the measures.

Preferably, said probe of said testing device is aligned with said senders.

In a first preferred embodiment of the invention, said testing device comprises an universal joint and said probe is the articulated centre of said universal joint.

According to a different embodiment, the testing device comprises a joint with four pivotal coupling, of which a first having an axis parallel to the testing device, a second orthogonal to the testing device, a third orthogonal to the second and a fourth having axis parallel to the arm of an user.

Alternatively, said testing device has a spherical end and said probe is the centre thereof. In a further embodiment, said testing device comprises a conic or frustum conical end.

Preferably, the reference block is a triangular support or is star-shaped with three or more points and said senders are arranged at its vertices. The reference block comprises means for attaching it to the object to measure, such as in particular permanent magnet means.

Advantageously, for measuring the velocity of sound at the conditions (pressure, temperature and humidity) wherein the measuring is carried out, a further couple sender-receiver is provided, located at a known distance directed with respect to each other and connected with said electronic control unit. Said sender-receiver couple can be integrated on said reference block, and said distances can be the distances between two vertices thereof.

### Brief description of the drawings

Further characteristics and the advantages of the method and of the apparatus for the detection, by means of ultrasonic pulses, of the coordinates of objects with respect to a reference system, will be made clearer with the following description of an embodiment thereof, exemplifying but not limitative, with reference to the attached drawings, wherein:
- figure 1 shows an apparatus according to the invention for the detection, by means of ultrasonic pulses, of the coordinates of objects, comprising a testing device, receivers integral to a reference block, a control electronic unit and a control and display PC;
- figure 2 shows the apparatus of figure 1 throughout a detection step of points of a car;
- figures 3A and 3B show a front and rear view of a type of testing device according to the invention respectively with two different types of probes at its end;
- figures 4a and 4b show a front and side view of a type of articulated joint of the probe of a testing device of the apparatus according to the invention;
- figure 5 shows a diagrammatical view of the range of action of the testing device with respect to the block receiver with a diagrammatical view of the measuring step of two diagonals and of two couples of points symmetrical with respect to a car longitudinal axis;
- figure 6 shows a diagrammatical view of the measuring step of two points of an object which are at opposite sides with respect to each other;
- figure 7 is a block diagram of the apparatus according to the invention;
- figure 8 is a flow-sheet of computing means residing in the control electronic unit (microcontroller);
- figures from 9 to 12 are block diagrams of the architecture of the software residing in the PC, respectively concerning the general layout of the architecture, the Client/Server layout of a control block, analysis of the Client, analysis of the Server.
- figure 13 is a table of X, Y, Z coordinates measured on a car by means of the apparatus of figure 1 and ready for being compared with the data recorded in a database;

### Description of the preferred embodiments

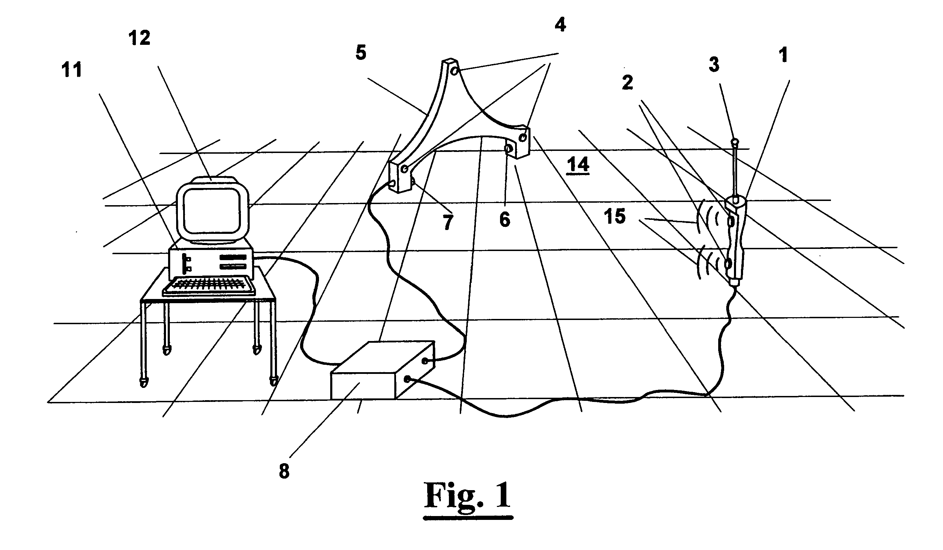

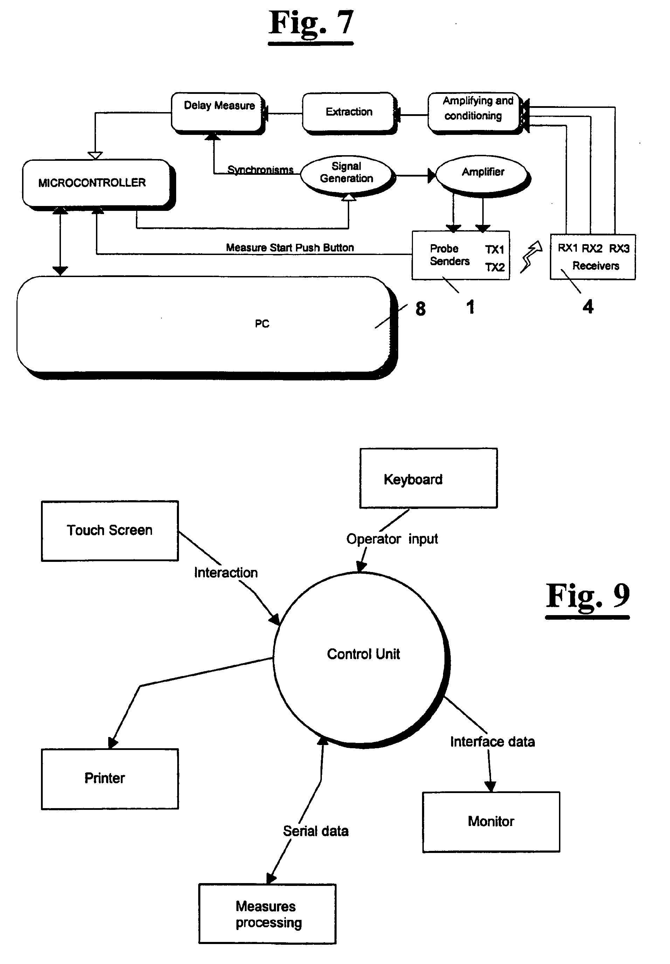

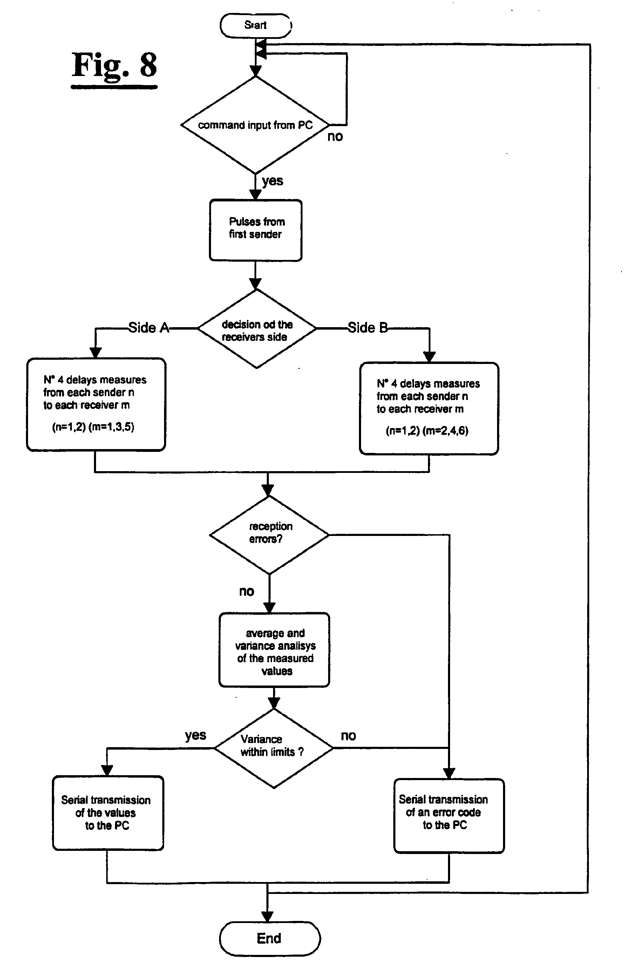

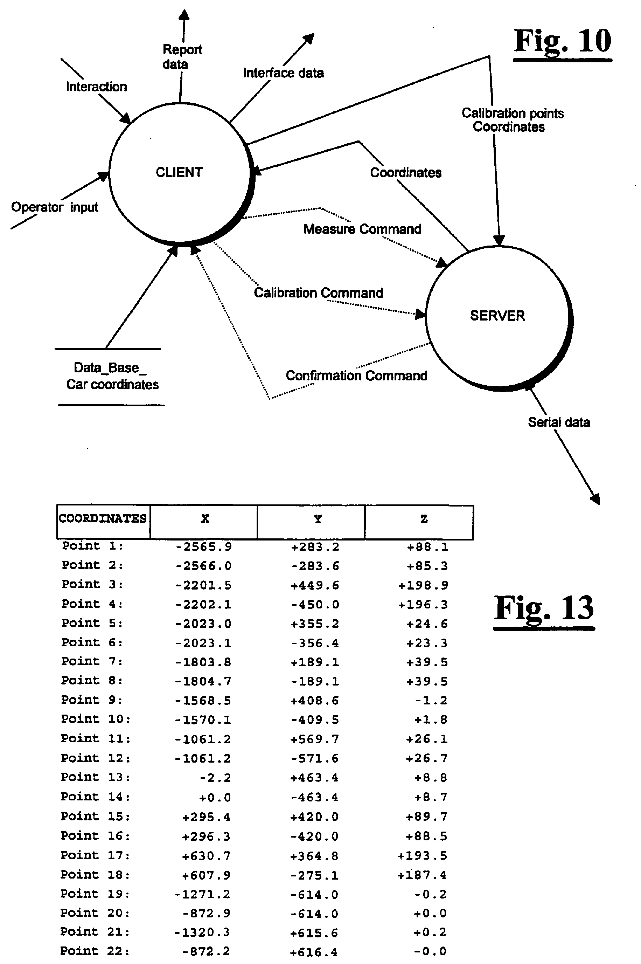

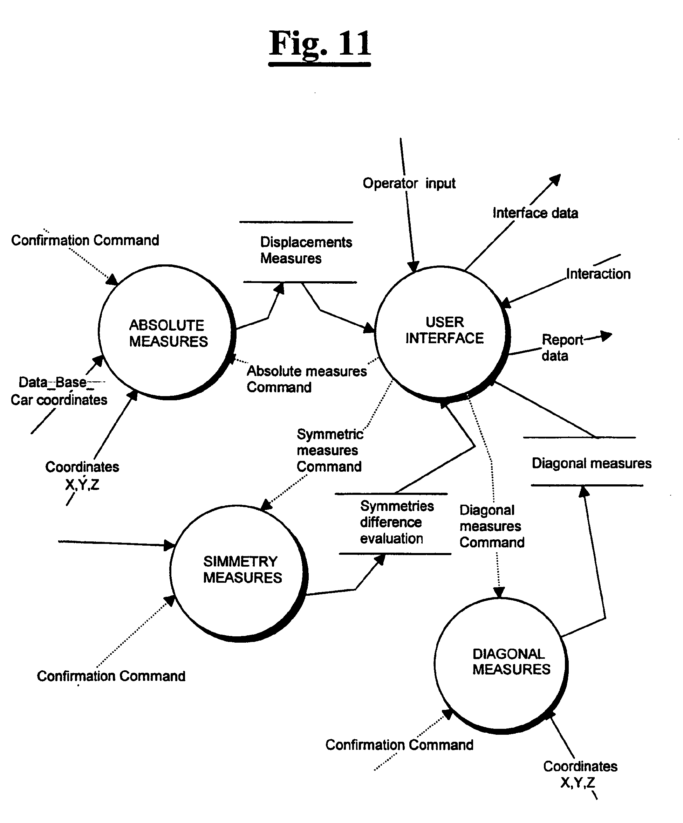

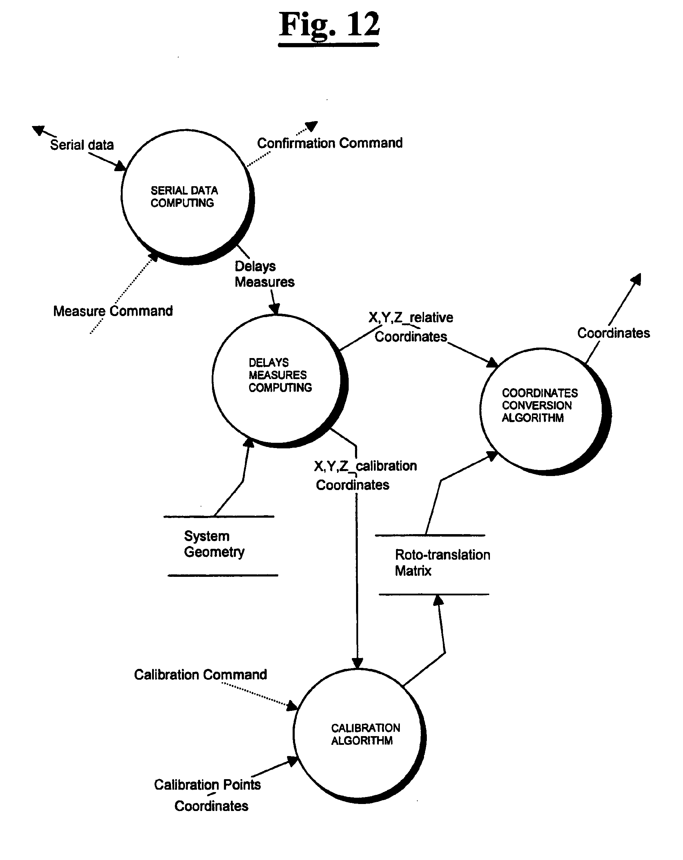

According to the present invention, a method for the detection, by means of ultrasonic pulses, of the coordinates of objects with respect to a reference system, whose block diagram is shown in fig. 7, is operated by the apparatus according to the invention consisting in the following parts, numbered in figure 1:
- a testing device 1, comprising two senders of ultrasonic pulses 2, aligned with a probe 3;
- three receivers 4 connected at the vertices of a reference block 5 having a substantially triangular shape;
- a couple sender-receiver 6-7, located at a known distance between two of the vertices of the reference block 5, for measuring the velocity of sound in the conditions (pressure, temperature and humidity) wherein the measuring step is carried out;
- a electronic control unit residing in PC 8, operating according to the flow-sheet of figure 8, which drives senders 2, computes the signals obtained from receivers 4, and provides to the control system the delays of the pulses coming from senders 2;
- a software, whose architecture is exemplified by the diagrams of figures 9-12 which, starting from the measured delays, calculates the position of probe 3 of testing device 1 and presents it to an operator 10, displaying it on a monitor 11 of a computing unit 12.

The software of figures 9-12 in turn comprises the following parts:
- an algorithmic part which, by means of geometrical formulas in the three-dimensional space, derives the coordinates from the delays;
- a database that contains the dimensional data of the cars (or other objects to measure) present on the market, suitable for being compared with the measured coordinates;
- a display control that allows the derivation from the database of the specific model of the car to check, allows the measure, provides the results, administers a database of the clients of the body shop (or of the factory that carries out the measuring), on demand carries out the printouts with the results of the measures.

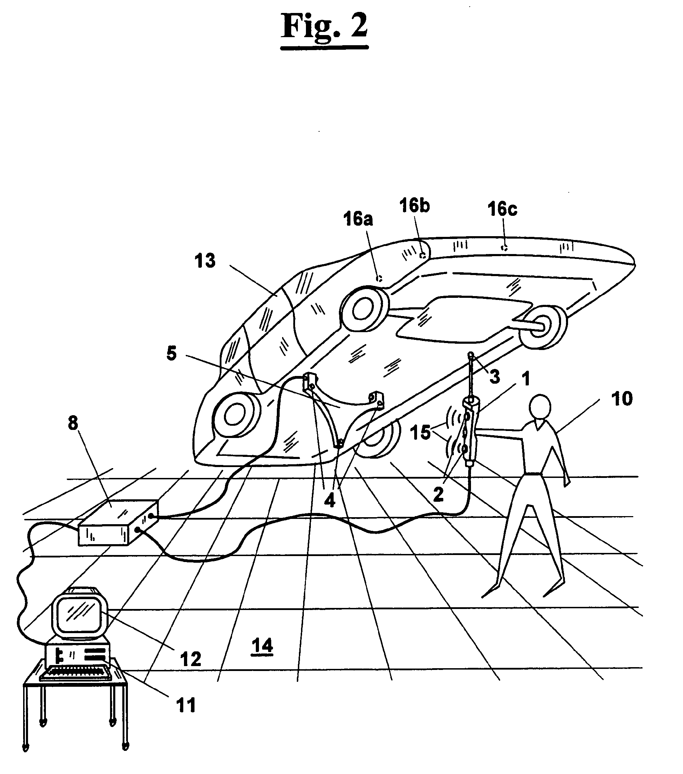

With reference to figure 2, the use of the apparatus in the case of detection of points on an object 13 is based on determining the spatial positions of probe 3 of testing device 1, which can be for example the centre of an universal joint or other equivalent joint, as well as the centre of a ball end or the vertex of a conic end.

Said probe 3 is approached by operator 10 to the points of an object to measure, for example a car 13 further to crash and that has been already repaired or that has to be repaired.

Reference points on car 13 can be bolt heads or holes, as well as relevant points of the body.

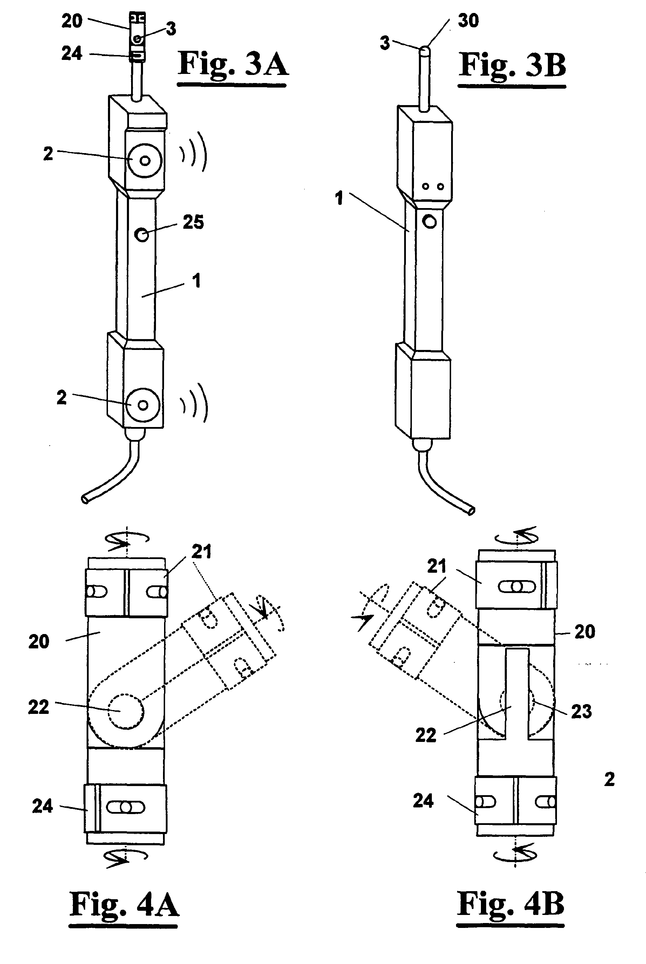

In the first case, for example the measure of the position of bolts, the testing device 1, shown also in figure 3A and 3B, has probe 3 consisting in a joint 20 (fig. 3A) or, alternatively, in an universal joint. Joint 20, shown enlarged in figure 4, has four pivotal couplings 21, 22, 23 and 24 of which the central couplings 22 and 23 orthogonal to each other and orthogonal to the side couplings 21 and 24. At its end a bush is inserted, with a cylindrical recess. Joint 20, or its bush, can be substituted for fitting to the different diameters of different bolts that may be present on the car bodies. Once joint 20 has been inserted on the bolt head whose position is to be determined, probe 3 of testing device 1 is located in a known position and univocal measured with respect to the head same, and this allows to calculate its position, independently from the angle of rotation of joint 20.

In the second case, i.e. measure of the position of holes or of points of the body without bolts, joint 20 is replaced by a ball end 30 (figure 3B) whose centre is the probe point, or from the vertex of a conic end. Ball 30 or the conic end can touch a hole of vehicle 13 body, and in this case its location is not undetermined, since whichever rotation thereof about the axis of the testing device, or, only in the case of the ball, whichever rotation about to the centre of the sphere, the position of the probe is unchanged. Ball or the conic end can also touch whichever location of the body whose position is to be determined.

For carrying out the measuring step reference block 5 (figures 1 and 2), comprising receivers 4, can be put in a fixed position with respect to car 13.

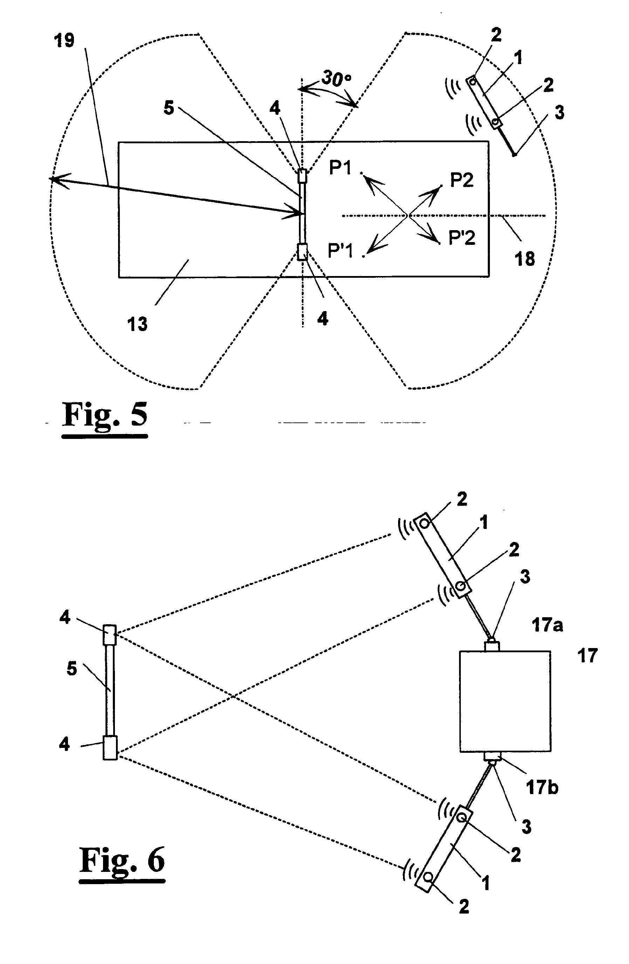

Reference block 5 is positioned, for example, on the ground 14 (fig. 1), neighbouring the measuring zone and within a limit distance (i.e. three metres) from the farthest measuring location. For passing this limit, indicated with 19 in figure 5, receivers 4 of reference block 5 can be arranged at the centre of object 13, in order to provide a bi-directional block, obtaining a double measuring range (for example about 6 metres) in longitudinal direction.

If the measure is relative to the lower part of the object, such as the car 13 under-body or neighbouring parts thereof, it has to be raised from the ground by a suitable lifting means. Then, reference block 5 is located in fixed position with respect to the under-body, in a zone spaced about equally from the two ends (fig. 5). The connection between car 13 under-body and block 5 is for example made easier by permanent magnets at two vertices of the latter.

After having located block 5 with receivers 4, the measuring step is carried out by touching with testing device 1 the points whose coordinates are in turn to be measured. An example is indicated in figure 9 for 22 points relevant of a car.

Once testing device 1 is at each measure point, then the measure is effected by pressing a push button 25 provided on testing device 1 (figure 3A). This starts the transmission of ultrasonic pulses 15 that, by means of the measure of their time of transit to receivers 4 of figure 1 and 2, allows to calculate the position of testing device 1 same.

A further push button 26 can be provided on the rear of testing device 1 (fig. 3B) for the confirmation of the measure same.

The measuring range for testing device 1 is defined by a double sector (figure 5), with the minor bases located at the block of the receivers, and with angles at the vertex of beyond 60°. Reference block 5 of receivers 4 can be located with respect to the object to measure in a desired way, provided this object is inside the double sector measuring range.

As shown in figure 6, it is possible to measure the distances between two opposite points of an object, for example two points 17a and 17b of an engine 17 of a car, bringing testing device 1 to touch in turn the two points.

Given four points P1, P2, P'1 and P'2, which must belong to a square, or rectangle or trapezium, furthermore, it is possible to check that the diagonal distances P1-P'2 and P2-P'1 are equal to each other, as well as that the distances of P1, P'1 or of P2, P'2 from the axis of symmetry 18 of the vehicle are the same.

With reference to figure 2, for measuring points of the upper- and of the under-body of the object, for example car 13, it is possible to proceed as follows: when the car is raised, the points of the under-body are measured and three side points of the vehicle are measured too, for example 16a, 16b and 16c. Then the vehicle is lowered locating block 5 for example on the ground and points 16a, 16b and 16c are measured again, allowing a not complex coordinate transfer by means of the software. This way, it is possible to calculate distances, checking symmetries and diagonals between the points of the upper-body and of the under-body of the car, using the same reference system.

By the apparatus according to the invention, given an object and by means of an automatic procedure, it is possible to measure, further to the distances between points thereof, also its absolute position in the space, relatively to a reference system, such as for the input of the object's points in a database.

In the case of cars, this allows the measure of the position in space of whichever outer point of the whole body. In case of other objects, for example prototypes of a desired objects, models, moulds, etc. the operative method is the same.

In particular, the described apparatus allows, by means of a similar procedure, to determine the position of the cars for the database provided by the manufacturer with the apparatus same.

## Claims

1. Apparatus for the detection, by means of ultrasonic pulses (15), of the coordinates of an object (13) to be measured with respect to a reference system, including:
- a portable testing device (1), suitable for touching predetermined points of said object (13) to be measured, said testing device (1) having at least two senders (2) of ultrasonic pulses (15),
- a probe (3), provided on said testing device (1) and in position known and fixed with respect to said senders (2);
- a reference block (5) comprising three receivers (4), arranged in mutually known and fixed positions and being provided with means for fastening to said object to be measured;
- and correlation means (8) adapted to calculate:
a) the delays between the instant of transmission of signals (15) by said senders (2) and the instant of reception of said signals (15) by said receivers (4), and
b) the spatial position of said senders (2) with respect to said receivers (4).

2. Apparatus according to claim 1, wherein said correlation means (8) comprises:
- an electronic control unit with means for driving said senders (2), means for analysing the signals (15) obtained from said receivers (4), and means for measuring the delays of the pulses (15) of said senders (2) to said receivers (4);
- a computing unit (8) connected with said electronic control unit and comprising display means for an operator;
- a software residing in said computing unit (8) which, starting from measuring said delays, calculates the position of said probe (3) of the testing device (1) and communicates them to said display means.

3. Apparatus according to claim 2, wherein said software comprises:
- an algorithmic part which, by geometrical formulas in the three-dimensional space, derives coordinates from the delays;
- a database that contains the dimensional data of the objects (13) to measure, such as for example of cars present on the market, said data being compared with said coordinates.

4. Apparatus according to claims 2 or 3, wherein said software comprises a display control that allows the derivation from the database of the specific model of the object to check, allows the measure and provides the results, administers a database of the clients of the operator or of the factory that makes first the measuring, carries out the printouts with the results of the measure.

5. Apparatus according to claim 1, wherein said testing device (1) comprises an articulated joint (20) and said probe (3) is the centre of said articulated joint (20).

6. Apparatus according to claim 1, wherein said testing device (1) comprises a spherical element (20) and said probe (3) is the centre thereof.

7. Apparatus according to claim 1, wherein said means for fastening to said object to be measured comprises permanent magnet means.

8. Apparatus according to claim 1, wherein for determining the velocity of sound in the conditions (pressure, temperature and humidity) wherein the measure is carried out, a sender-receiver couple is provided, located at a known distance from each other and connected to said reference block (5), whereby the measure of the distances in function of the delays is enhanced by means of a continuous measure of the velocity of sound in the air.

9. Apparatus according to claim 1, wherein said three receivers (4) are arranged according to a triangle.

10. Method of detection, by means of ultrasonic pulses (15), of the coordinates of an object (13) to be measured with respect to a reference system, and in particular of the spatial positions of the probe (3) of one handheld testing device (1) that touches predetermined points of said object comprising the steps of:
- transmission of ultrasonic pulses (15) starting from the hand held testing device (1) having at least two sender points whose position is known with respect to said probe (3);
- reception of said ultrasonic pulses (15) by three receiver points, arranged in mutually known and fixed positions on a reference block (5), said reference block being fastenable to said object;
- calculation of
a) the delays between the instant of transmission of signals (15) by said sender points and the instant of reception of said signals (15) by said receiver points
b) the spatial position of said sender points (2) with respect to said receiver points (4).

## Patentansprüche

1. Vorrichtung zur Ermittlung der Koordinaten eines innerhalb eines Bezugssystems zu messenden Objekts (13) mittels Ultraschallimpulsen (15), welches folgendes umfasst:
- ein tragbares Testgerät (1), das zum Abtasten bestimmter Punkte des zu messenden Objekts (13) bestimmt ist, wobei das Testgerät (1) mindestens zwei Sender (2) zum Senden von Ultraschallimpulsen (15) besitzt;
- eine Sonde (3), die auf dem Testgerät (1) an bekannter Position vorgesehen und bezüglich der Sender (2) befestigt ist;
- einen Referenzblock (5), welcher drei Empfänger (4) umfasst, welche an bekannten, festen Positionen zueinander angebracht und mit Mitteln zur Befestigung an den zu messenden Objekten versehen sind;
- sowie Korrelationsmittel (8) zur Berechnung von:
a) der Laufzeiten zwischen dem Moment der Übertragung der Signale (15) durch die Sender (2) und dem Moment des Empfangs der Signale (15) durch die Empfänger (4) sowie
b) der räumlichen Position der Sender (2) bezüglich der Empfänger (4).

2. Vorrichtung gemäß Anspruch 1, in welchem die Korrelationsmittel (8) folgendes umfassen:
- eine elektronische Steuereinheit mit Mitteln für den Betrieb der Sender (2), Mitteln zur Analyse der von den Empfängern (4) erhaltenen Signale (15) und Mitteln zum Messen der Laufzeiten der Impulse (15) von den Sendern (2) zu den Empfängern (4);
- eine Recheneinheit (8), welche an die elektronische Steuereinheit angeschlossen ist und Anzeigemittel für einen Bediener umfasst;
- ein Software-Programm in der Recheneinheit (8), welches ausgehend von der Messung der Laufzeiten die Position der Sonde (3) des Testgeräts (1) berechnet und diese an die Anzeigemittel weiterleitet.

3. Vorrichtung gemäß Anspruch 2, in welchem das Software-Programm folgendes umfasst:
- einen algorithmischen Teil, welcher mittels geometrischer Formeln im dreidimensionalen Raum die Koordinaten aus den Laufzeiten ableitet;
- eine Datenbank, welche die dimensionalen Daten des zu messenden Objekts (13), beispielsweise der auf dem Markt vorhandenen Fahrzeuge, enthält, wobei diese Daten mit den Koordinaten verglichen werden.

4. Vorrichtung gemäß Anspruch 2 oder 3, in welchem das Software-Programm eine Displaysteuerung umfasst, welche die Ableitung von der Datenbank des jeweiligen Modells des zu kontrollierenden Objekts, die Messung und Bereitstellung der Ergebnisse, die Verwaltung einer Datenbank der Kunden des Bedieners oder der die erste Messung ausführenden Fabrik ermöglicht und den Ausdruck der Messergebnisse vornimmt.

5. Vorrichtung gemäß Anspruch 1, in welchem das Testgerät (1) eine Gelenkverbindung (20) umfasst und die Sonde (3) sich in der Mitte der Gelenkverbindung (20) befindet.

6. Vorrichtung gemäß Anspruch 1, in welchem das Testgerät (1) ein sphärisches Element (20) umfasst und die Sonde (3) die Mitte desselben darstellt.

7. Vorrichtung gemäß Anspruch 1, in welchem die Mittel zur Befestigung des zu messenden Objekts Dauermagnetmittel umfassen.

8. Vorrichtung gemäß Anspruch 1, in welchem zur Bestimmung der Schallgeschwindigkeit unter den jeweiligen Bedingungen (Druck, Temperatur und Feuchtigkeit), unter denen die Messung ausgeführt wird, ein Sender-Empfänger-Paar vorgesehen ist, welche sich in einem bekannten Abstand voneinander befinden und mit dem Referenzblock (5) verbunden sind, wobei die Messung der Abstände als Funktion der Laufzeiten mittels kontinuierlicher Messung der Schallgeschwindigkeit in der Luft verbessert wird.

9. Vorrichtung gemäß Anspruch 1, in welchem die drei Empfänger (4) in Form eines Dreiecks angeordnet sind.

10. Verfahren zur Ermittlung der Koordinaten eines innerhalb eines Bezugssystems zu messenden Objekts (13) und insbesondere der räumlichen Position der Sonde (3) eines tragbaren Testgeräts (1) mittels Ultraschallimpulsen (15), welche bestimmte Punkte des Objekts abtastet und folgende Schritte umfasst:
- Übertragung von Ultraschallimpulsen (15) ausgehend vom tragbaren Testgerät (1), welches mindestens zwei Senderpunkte besitzt, deren Position bezüglich der Sonde (3) bekannt ist;
- Empfang von Ultraschallimpulsen (15) durch drei Empfängerpunkte, welche an bekannten, festen Positionen zueinander auf einem Referenzblock (5) angebracht sind, wobei der Referenzblock an dem Objekt befestigbar ist;
- Berechnung von:
a) den Laufzeiten zwischen dem Moment der Übertragung der Signale (15) durch die Senderpunkte und dem Moment des Empfangs der Signale (15) durch die Empfängerpunkte
b) der räumlichen Position der Senderpunkte (2) bezüglich der Empfängerpunkte (4).

## Revendications

1. Appareil destiné à détecter, au moyen d'impulsions ultrasonores (15), les coordonnées d'un objet (13) à mesurer par rapport à un système de référence, comprenant :
- un dispositif d'essai portable (1), adapté pour toucher des points prédéterminés dudit objet (13) à mesurer, ledit dispositif d'essai (1) ayant au moins deux dispositifs d'envoi (2) d'impulsions ultrasonores (15),
- une sonde (3), prévue sur ledit dispositif d'essai (1) dans une position connue et fixe par rapport auxdits dispositifs d'envoi (2) ;
- un bloc de référence (5) comprenant trois récepteurs (4), disposés dans des positions mutuellement connues et fixes et munis de moyens destinés à fixer ledit objet à mesurer ;
- et un moyen de corrélation (8) adapté pour calculer :
a) les retards entre le moment de l'émission de signaux (15) par lesdits dispositifs d'envoi (2) et le moment de la réception desdits signaux (15) par lesdits récepteurs (4), et
b) la position spatiale desdits dispositifs d'envoi (2) par rapport auxdits récepteurs (4).

2. Appareil selon la revendication 1, dans lequel ledit moyen de corrélation (8) comprend :
- une unité de commande électronique avec un moyen pour commander lesdits dispositifs d'envoi (2), un moyen pour analyser les signaux (15) obtenus depuis lesdits récepteurs (4), et un moyen pour mesurer les retards des impulsions (15) desdits dispositifs d'envoi (2) vers lesdits récepteurs (4) ;
- une unité de calcul (8) connectée à ladite unité de commande électronique et comprenant un moyen d'affichage pour un opérateur ;
- un logiciel hébergé dans ladite unité de calcul (8) qui, en commençant par mesurer lesdits retards, calcule la position de ladite sonde (3) du dispositif d'essai (1) et communique ceux-ci audit moyen d'affichage.

3. Appareil selon la revendication 2, dans lequel ledit logiciel comprend :
- une partie algorithmique qui, au moyen de formules géométriques dans l'espace tridimensionnel, dérive les coordonnées à partir des retards;
- une base de données qui contient les données de dimension des objets (13) à mesurer, comme par exemple des automobiles présentes sur le marché, lesdites données étant comparées auxdites coordonnées.

4. Appareil selon la revendication 2 ou 3, dans lequel ledit logiciel comprend une commande d'affichage qui permet de dériver à partir de la base de données le modèle spécifique de l'objet à vérifier, permet de mesurer et fournit les résultats, administre une base de données des clients de l'opérateur ou de l'usine qui effectue la mesure en premier lieu, réalise la liste des résultats avec les résultats de la mesure.

5. Appareil selon la revendication 1, dans lequel ledit dispositif d'essai (1) comprend une jonction articulée (20) et ladite sonde (3) est le centre de ladite jonction articulée (20).

6. Appareil selon la revendication 1, dans lequel ledit dispositif d'essai (1) comprend un élément sphérique (20) et ladite sonde (3) est le centre de celui-ci.

7. Appareil selon la revendication 1, dans lequel ledit moyen de fixation dudit objet à mesurer comprend un moyen d'aimant permanent.

8. Appareil selon la revendication 1, dans lequel, pour déterminer la vitesse du son dans les conditions (pression, température et humidité) dans lesquelles la mesure est effectuée, un couple de dispositifs d'envoi-réception est prévu, situés à une distance connue l'un de l'autre et connectés au bloc de référence (5), moyennant quoi la mesure des distances en fonction des retards est améliorée au moyen d'une mesure continue de la vitesse du son dans l'air.

9. Appareil selon la revendication 1, dans lequel lesdits trois récepteurs (4) sont disposés en triangle.

10. Procédé de détection, au moyen d'impulsions ultrasonores (15), des coordonnées d'un objet (13) à mesurer par rapport à un système de référence, et en particulier des positions spatiales de la sonde (3) d'un dispositif d'essai de poche (1) qui touche des points prédéterminés dudit objet, comprenant les étapes suivantes :
- émettre des impulsions ultrasonores (15) démarrant du dispositif d'essai de poche (1) ayant au moins deux points d'envoi dont la position est connue par rapport à ladite sonde (3) ;
- recevoir lesdites impulsions ultrasonores (15) au niveau de trois points de réception, disposés dans des positions mutuellement connues et fixés sur un bloc de référence (5), ledit bloc de référence pouvant être fixé sur ledit objet;
- calculer
a) les retards entre le moment de l'émission de signaux (15) par lesdits points d'envoi et le moment de la réception desdits signaux (15) par lesdits points de réception,
b) la position spatiale desdits points d'envoi (2) par rapport auxdits points de réception (4).
